# EUROPEAN PATENT APPLICATION

(11) **EP 4 852 501 A1**
(43) Date of publication of application: **09.12.2026**
(21) Application number: 24921021.2
(22) Date of filing: 02.02.2024
(51) Int. Cl.: H04W 24/10

(54) **DATA COLLECTION METHOD AND APPARATUS**

(71) Applicant: 1FINITY INC., Kawasaki-shi, Kanagawa 211-8588 (JP)
(72) Inventor: WANG, Guotong, Beijing 100022 (CN); WANG, Xin, Beijing 100022 (CN); JIN, Liqiang, Beijing 100022 (CN); ZHANG, Qun, Beijing 100022 (CN); SUN, Gang, Beijing 100022 (CN)
(74) Representative: Haseltine Lake Kempner LLP
(86) International application number: PCT/CN2024/075565
(87) International publication number: WO 2025/160965

(57) **Abstract**

Embodiments of the present application provide a data collection method and apparatus. The data collection method includes: receiving, by a terminal equipment, configuration information for collecting data, from a network device; and acquiring, by the terminal equipment, data for AI/ML functionality/model training according to the configuration information.

## Description

### TECHNICAL FIELD

Embodiments of the present application relate to the field of communications technologies.

### BACKGROUND

In NR Rel-18, artificial intelligence or machine learning (AI/ML) for an air interface has been studied. AI/ML may be used for the following use cases: Channel State Information (CSI) feedback enhancement, beam management, and positioning enhancement. The CSI feedback enhancement may include CSI prediction and CSI compression; the beam management may include spatial beam prediction (BM case-1) and temporal beam prediction (BM case-2); and the positioning enhancement may include direct positioning and AI/ML assisted positioning.

In some sub use cases, a bilateral model may be used, where an AI/ML model operates on both a terminal equipment side and a network device side. In some other sub use cases, a unilateral model may be used, where the AI/ML model operates on either a terminal equipment side or a network device side. For beam management, the AI/ML model may operate on the terminal equipment side and/or the network device side.

It should be noted that, the above introduction to the background is merely for the convenience of clear and complete description of the technical solution of the present application, and for the convenience of understanding of persons skilled in the art. It cannot be regarded that the above technical solution is commonly known to persons skilled in the art just because that the solution has been set forth in the background of the present application.

### SUMMARY

The inventors found that a terminal equipment and/or a network device are/is able to predict beams by utilizing an AI/ML functionality/model and according to a beam measurement result, but there is currently no clear solution as regards how to collect data for AI/ML training.

To address at least one of the above problems, embodiments of the present application provide a data collection method and apparatus.

According to an aspect of embodiments of the present application, there is provided with a data collection method, including:
receiving, by a terminal equipment, configuration information for collecting data, from a network device; and
acquiring, by the terminal equipment, data for AI/ML functionality/model training according to the configuration information.

According to another aspect of embodiments of the present application, there is provided with a data collection apparatus, including:
a receiving unit configured to receive configuration information for collecting data, from a network device; and
a processing unit configured to acquire data for AI/ML functionality/model training according to the configuration information.

According to another aspect of embodiments of the present application, there is provided with a data collection method, including:
transmitting, by a network device, configuration information for collecting data to a terminal equipment; wherein the configuration information is used by the terminal equipment to acquire data for AI/ML functionality/model training.

According to another aspect of the embodiments of the present application, there is provided with a data collection apparatus, including:
a transmitting unit configured to transmit configuration information for collecting data to a terminal equipment; wherein the configuration information is used by the terminal equipment to acquire data for AI/ML functionality/model training.

According to another aspect of embodiments of the present application, there is provided with a communication system, including:
a network device configured to transmit configuration information for collecting data to a terminal equipment; and
a terminal equipment configured to acquire data for AI/ML functionality/model training according to the configuration information.

One of the beneficial effects of the embodiments of the present application is that the terminal equipment acquires data for AI/ML functionality/model training according to configuration information. Thus, accurate training data can be obtained, and the performance and efficiency of AI/ML can be improved.

With reference to the specification and drawings below, specific embodiments of the present application are disclosed in detail, which specify the manner in which the principles of the present application may be adopted. It should be understood that, the scope of the embodiments of the present application is not limited. Within the scope of the clause of the appended claims, the embodiments of the present application include many variations, modifications and equivalents.

The features described and/or shown for one embodiment can be used in one or more other embodiments in the same or similar manner, can be combined with the features in other embodiments or replace the features in other embodiments.

It should be emphasized that, the term "include/comprise" refers to, when being used in the text, existence of features, assemblies, steps or components, without exclusion of existence or attachment of one or more other features, assemblies, steps or components.

### BRIEF DESCRIPTION OF THE DRAWINGS

Elements and features described in one of the drawings or embodiments of the present application may be combined with the elements and features shown in one or more other drawings or embodiments. Moreover, in the drawings, similar reference signs indicate corresponding parts in several drawings and may be used to indicate corresponding parts used in more than one embodiment.
FIG. 1 is a schematic diagram of a communication system in embodiments of the present application;
FIG. 2 is a schematic diagram of a data collection method in embodiments of the present application;
FIG. 3 is a schematic diagram of AI/ML for beam management in embodiments of the present application;
FIG. 4 is a schematic diagram of a beam management method in embodiments of the present application;
FIG. 5 is an exemplary diagram illustrating data collection using set A and set B in embodiments of the present application;
FIG. 6 is an exemplary diagram of collected data in embodiments of the present application;
FIG. 7 is an exemplary diagram of collected data in embodiments of the present application;
FIG. 8 is an exemplary diagram of collected data in embodiments of the present application;
FIG. 9 is a schematic diagram of data collection in embodiments of the present application;
FIG. 10 is an exemplary diagram of collected data in embodiments of the present application;
FIG. 11 is an exemplary diagram of reference signal transmission in embodiments of the present application;
FIG. 12 is an exemplary diagram of collected data in embodiments of the present application;
FIG. 13 is an exemplary diagram of collected data in embodiments of the present application;
FIG. 14 is a schematic diagram of data collection in embodiments of the present application;
FIG. 15 is an exemplary diagram of collected data in embodiments of the present application;
FIG. 16 is a schematic diagram of a data collection method in embodiments of the present application;
FIG. 17 is a schematic diagram of a data collection apparatus in embodiments of the present application;
FIG. 18 is a schematic diagram of a data collection apparatus in embodiments of the present application;
FIG. 19 is a schematic diagram of a terminal equipment in embodiments of the present application; and
FIG. 20 is a schematic diagram of a network device in embodiments of the present application.

### DETAILED DESCRIPTION

With reference to the drawings, the foregoing and other features of the present application will become apparent through the following specification. The specification and the accompanying drawings specifically disclose the particular embodiments of the present application, showing part of the embodiments in which the principle of the present application can be adopted, it should be understood that the present application is not limited to the described embodiments, on the contrary, the present application includes all modifications, variations and equivalents that fall within the scope of the appended claims.

In embodiments of the present application, the terms "first", "second", etc., are used to distinguish different elements by their appellation, but do not indicate the spatial arrangement or chronological order of these elements, etc., and these elements shall not be limited by the terms. The term "and/or" includes any and all combinations of one or more of the terms listed in association with the term. The terms "contain", "include", "have", etc., refer to the presence of the stated feature, element, component or assembly, but do not exclude the presence or addition of one or more other features, elements, components or assemblies

In embodiments of the present application, the singular forms "a/an", "the", etc., including the plural forms, shall be broadly understood as "a sort of" or "a kind of" and not limited to the meaning of "one"; furthermore, the term "the" shall be understood to include both the singular form and the plural form, unless it is expressly indicated otherwise in the context. In addition, the term "according to" should be understood to mean "at least partially according to ...", and the term "based on" should be understood to mean "based at least partially on ...", unless it is expressly indicated otherwise in the context.

In embodiments of the present application, the term "communications network" or "wireless communications network" may refer to a network that complies with any of the following communication standards, such as Long Term Evolution (LTE), Enhanced Long Term Evolution (LTE-A), Wideband Code Division Multiple Access (WCDMA), High-Speed Packet Access (HSPA), etc.

In addition, the communication between the devices in the communication system can be carried out according to the communication protocol of any stage, for example, including but not being limited to 1G (generation), 2G, 2.5G, 2.75G, 3G, 4G, 4.5G and 5G, New Radio (NR), future 6G and etc., and/or other communication protocols currently known or to be developed in the future.

In embodiments of the present application, the term "network device" refers to, for example, a device in the communication system that connects a terminal equipment to the communication network and provides services to the terminal equipment. The network device may include but is not limited to: a base station (BS), an access point (AP), a transmission reception point (TRP), a broadcast transmitter, a mobile management entity (MME), a gateway, a server, a radio network controller (RNC), a base station controller (BSC), etc.

The base station may include, but is not limited to, a node B (NodeB or NB), an evolution node B (eNodeB or eNB), 5G base station (gNB), an IAB donor, etc., and may also include a remote radio head (RRH), a remote radio unit (RRU), a relay, or a low-power node (such as femto, pico, etc.). The term "base station" may include some or all of their functions, with each base station providing communication coverage to a specific geographic area. The term "cell" can refer to a base station and/or its coverage area, depending on the context in which the term is used.

In embodiments of the present application, the term "user equipment (UE)" or "terminal equipment (TE)" refers to, for example, an equipment accessing to a communication network and receiving network services via a network device, and may also be referred to as. The terminal equipment can be fixed or movable, and can also be called a mobile station (MS), a terminal, a subscriber station (SS), an access terminal (AT), a station, etc.

The terminal equipment may include but is not limited to: a cellular phone, a personal digital assistant (PDA), a wireless modems, a wireless communication device, a handheld device, a machine-type communication device, a laptop computer, a cordless phone, a smart phone, a smart watch, a digital camera, etc.

For another example, in scenarios such as Internet of Things (IoT), the terminal equipment may also be a machine or an apparatus that performs monitoring or measurement, and may include, but is not limited to, a machine type communication (MTC) terminal, a vehicle communication terminal, a device to device (D2D) terminal, a machine to machine (M2M) terminal, and etc.

In addition, the term "network side" or "network device side" refers to the side of the network, which may be a base station or may include one or more network devices as described above. The term "user side" or "terminal side" or "terminal equipment side" refers to the side of the user or terminal, which may be a UE or may include one or more terminal equipments as described above Without specifically indicated, "device" can refer to a network device or a terminal equipment.

Hereinafter the scenarios of embodiments of the present application are illustrated by examples, but which is not limited in the present application.

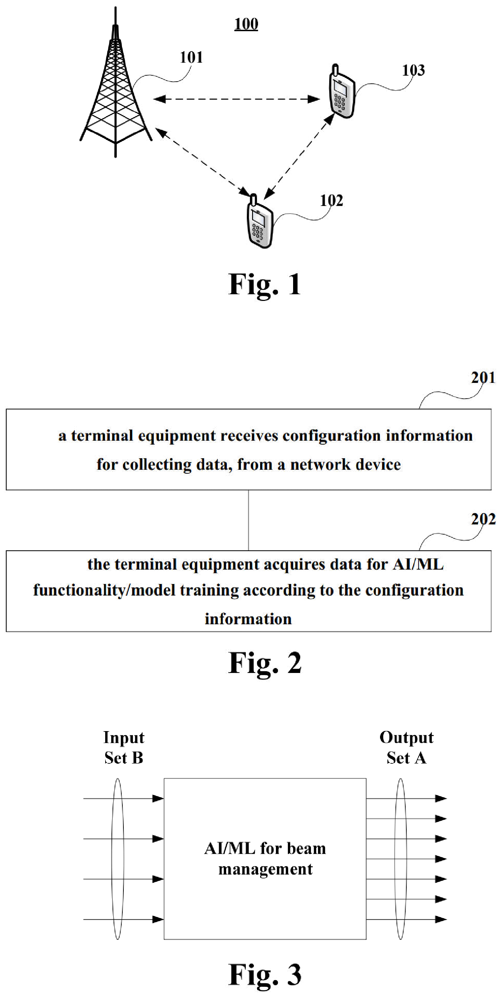

FIG. 1 is a schematic diagram of a communication system in embodiments of the present application, illustrating a case of a terminal equipment and a network device as examples. As shown in FIG. 1, a communication system 100 may include a network device 101 and terminal equipments 102 and 103. For simplicity, FIG. 1 illustrates only two terminal equipments and one network device as examples, but which is not limited in the embodiments of the present application.

In embodiments of the present application, existing services or services that may be implemented in the future may be transmitted between the network device 101 and the terminal equipments 102, 103. For example, these services may include, but are not limited to, enhanced Mobile Broadband (eMBB), massive Machine Type Communication (mMTC), and Ultra-Reliable and Low-Latency Communication (URLLC), and etc.

It is worth noting that FIG. 1 shows that two terminal equipments 102 and 103 are within a coverage of the network device 101, but which is not limited in the present application. Both of the two terminal equipments 102 and 103 may not be within a coverage of the network device 101, or one terminal equipment 102 is within the coverage of the network device 101 and the other terminal equipment 103 is outside the coverage of the network device 101.

In embodiments of the present application, a higher layer signaling may be, for example, Radio Resource Control (RRC) signaling; for example, it is called an RRC message, e.g., including MIB, system information, and a dedicated RRC message; or it is referred to as RRC information element (RRC IE). For example, the higher layer signaling can also be Medium Access Control (MAC) signaling; or is also called MAC control element (MAC CE). However, the present application is not limited to this.

In embodiments of the present application, one or more AI/ML models may be configured and run in a network device and/or a terminal equipment The AI/ML models may be used in various signal processing functions of wireless communication, such as CSI prediction, CSI compression, beam prediction and positioning management, etc.

### Embodiments of a First Aspect

The embodiments of the present application provide a data collection method, which is explained from a terminal equipment side.

FIG. 2 is a schematic diagram of a data collection method in embodiments of the present application, as shown in FIG. 2, the method including:
201: a terminal equipment receives configuration information for collecting data, from a network device; and
202: the terminal equipment acquires data for AI/ML functionality/model training according to the configuration information.

It is worth noting that FIG. 2 above only schematically illustrates the embodiments of the present application, but the present application is not limited to this. For example, the order of execution between operations may be adjusted appropriately, and some other operations may be added or one or more operations may be removed. Those skilled in the art may make appropriate variations in accordance with the above contents, and which is not limited to the disclosure of FIG. 2 above.

In some embodiments, functionality refers to an AI/ML feature/feature group enabled by a configuration, wherein the configuration is supported according to a condition indicated by UE capability.

For example, an AL/ML functionality may be one or more functionalities, or one or more logic models, or one or more sub functionalities, or one or more features, or one or more feature groups.

For another example, the functionality may refer to using AI/ML for spatial beam prediction, or using AI/ML for temporal beam prediction, or using AI/ML for CSI prediction, or using AI/ML for direct positioning, or using AI/ML assisted positioning, etc.

In some embodiments, configuration information for collecting data may include configuration information for one or more reference signals, such as CSI-RS configuration information, etc. The present application is not limited to this, and specific configuration information may also be seen by referring to the related art.

In some embodiments, the AI/ML functionality/model may be used for beam management. One or more reference signals are used for measurement, and measurement results are input into the AI/ML functionality/model; another one or more reference signals are used for the output of the AI/ML functionality/model to perform inference.

FIG. 3 is a schematic diagram of AI/ML for beam management in embodiments of the present application. As shown in FIG. 3, one or more reference signals in a second reference signal resource set (set B) may be received and measured by a terminal equipment, and a measurement result may be taken as an input of AI/ML. One or more reference signals in a first reference signal resource set (set A) may be used by the terminal equipment for output of AI/ML, and for example, a measurement result may be taken as labeled data or ground truth data for AI/ML. The specific contents of AI/ML as well as set A and set B may be seen by referring to the related art, and will not be repeated here.

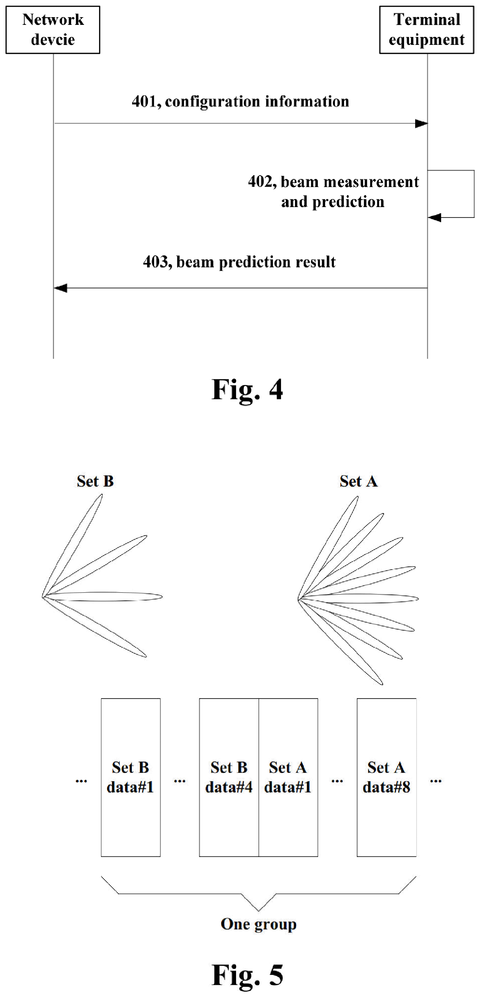

FIG. 4 is another schematic diagram of a beam management method in embodiments of the present application, which is described by taking a terminal equipment configured with AI/ML as an example. As shown in FIG. 4, the method includes:
401: a terminal equipment receives configuration information from a network device; for example, the configuration information includes a second reference signal resource set (Set B) for beam measurement and a first reference signal resource set (Set A) for beam prediction;
402: the terminal equipment performs beam measurement, and inputs a result of the beam measurement into an AI/ML functionality/model; for example, a measurement result of a reference signal in the set B is taken as an input of AI/ML, and a reference signal in the set A is used for prediction (or referred to as inference); and
403: the terminal equipment transmits a beam prediction result to a network device.

For example, an AI/ML functionality is at a terminal equipment side. After enabling or activating the AI/ML functionality, the terminal equipment performs beam measurement according to a reference signal from a network side, performs beam prediction by using AI/ML according to a beam measurement result, and transmits a prediction result to the network device.

It is worth noting that FIG. 4 above only schematically illustrates the embodiments of the present application, but the present application is not limited to this. For example, the order of execution between operations may be adjusted appropriately, and some other operations may be added or one or more operations may be removed. Those skilled in the art may make appropriate variations in accordance with the above contents, and which is not limited to the disclosure of FIG. 4 above.

The beam management based on AI/ML has been explained schematically hereinbefore, and data collection will be explained hereinafter.

In some embodiments, first data (labeled data) for output of an AI/ML functionality/model is collected, and/or, second data (input data) for input of the AI/ML functionality/model is collected; and the first data and the second data are collected in an associated manner.

For example, for beam management with AI/ML operations, during collection of training data, data (second data) for input of the AI/ML functionality/model may be collected, and ground truth data (first data, also referred to as labeled data) may also be collected. The data for input may be associated with the labeled data, and for example, the data (second data) for input and the labeled data (first data) may be placed in one sample or one group.

In some embodiments, one or more second reference signals in a second reference signal set for beam measurement is/are transmitted to the terminal equipment, and the terminal equipment measures the second reference signal(s) and acquires the second data.

In some embodiments, one or more first reference signals in a first reference signal set (set A) for beam prediction is/are transmitted to the terminal equipment, and the terminal equipment measures the first reference signal(s) and acquires first data.

For example, a reference signal the same as that of the set B may be configured and transmitted to UE to obtain data for input of the AI/ML functionality/model, that is, the UE measures the reference signal the same as that of the set B, and a result of measurement is taken as input data (second data).

For another example, a reference signal the same as that of the set A may be configured and transmitted to UE to obtain ground truth data, that is, the UE measures the reference signal the same as that of the set A, and the measurement result is the ground truth data (first data).

FIG. 5 is an exemplary diagram illustrating data collection using set A and set B in embodiments of the present application. As shown in FIG. 5, a second reference signal in set B may be configured and transmitted, and/or a first reference signal in set A may be configured and transmitted. The terminal equipment may acquire the first data and/or the second data according to the first reference signal and/or the second reference signal, and may store the first data and the second data in association.

In some embodiments, the second data includes an index of the second reference signal and corresponding beam quality information, and the first data includes an index of the first reference signal and corresponding beam quality information. In some other embodiments, the second data includes an index of the second reference signal, and the first data includes an index of the first reference signal.

For example, data for set A and data for set B may include a reference signal index and corresponding beam quality respectively, such as L1-RSRP/L1-SINR. Alternatively, the data for set A and the data for set B may each only include the reference signal index. Whether the data for set A and/or the data for set B only include(s) the reference signal index, or whether the data for set A and/or the data for set B include(s) the reference signal index and corresponding beam quality, may depend on configuration of the network device or may also depend on UE capability.

For another example, in one group, the number of the data (second data) for set B may be the same as the number of the reference signal in set B, or the number of the data (second data) for set B may be less than the number of the reference signal in set B. In one group, the number of the data (first data) for set A may be the same as the number of the reference signal in set A, or the number of the data (first data) for set A may be less than the number of the reference signal in set A.

For another example, only the reference signal the same as that of the set A may be configured and transmitted to UE to obtain ground truth data. In the obtained ground truth data, the terminal equipment may further distinguish which ground truth data is able to also be used for input data. Alternatively, in the obtained ground truth data, the terminal equipment does not distinguish which ground truth data is able to be used for input data any longer.

Training data collection for spatial beam prediction (BM case-1) with a network side model (NW-side model) will be explained firstly hereinbelow.

In some embodiments, for a network side model and spatial beam prediction, a second reference signal set (set B) for beam measurement is not a subset of a first reference signal set (set A) for beam prediction, one or more second reference signals in the second reference signal set (set B) is/are used to collect second data, and one or more first reference signals in the first reference signal set (set A) is/are used to collect first data.

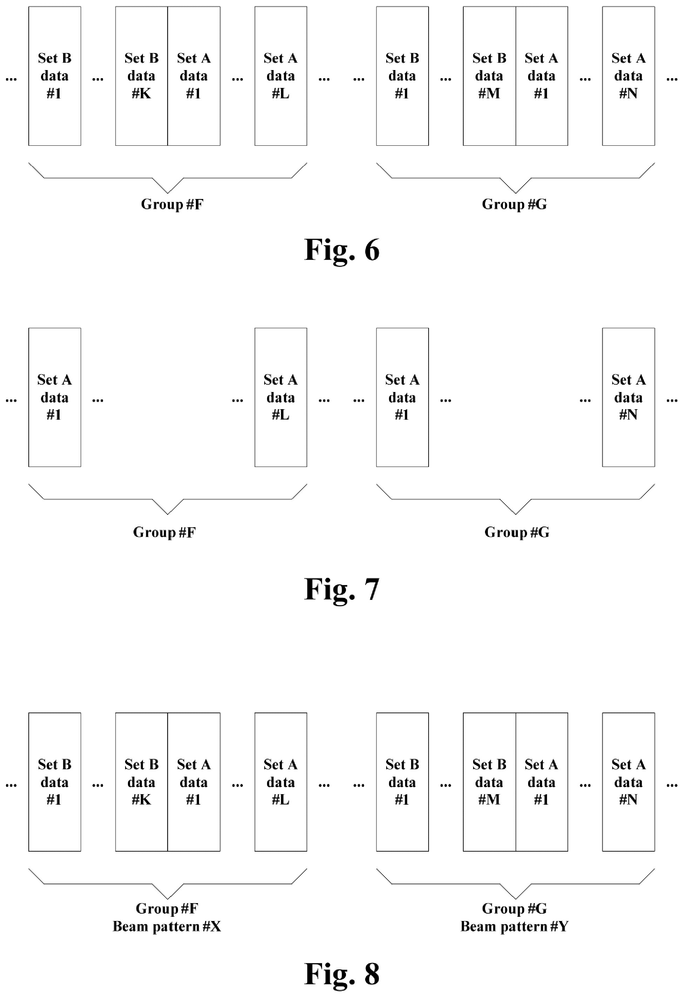

FIG. 6 is an exemplary diagram of collected data in embodiments of the present application. For example, for beam management with an AI/ML functionality/model and BM case-1 (spatial beam prediction) at a network side, during training data collection, if set B is not a subset of set A, a gNB may configure a reference signal the same as that of the set B and a reference signal the same as that of the set A for data collection. The data for input (second data, measurement results for set B) may be associated with the ground truth data (first data, measurement results for set A). As shown in FIG. 6, in each group, associated set A data (first data) and set B data (second data) may be included, and UE may store measurement results and report the collected data.

In some embodiments, for a network side model and spatial beam prediction, a second reference signal set (set B) for beam measurement is a subset of a first reference signal set (set A) for beam prediction, one or more first reference signals in the first reference signal set (set A) is/are used to collect first data, or, one or more second reference signals in the second reference signal set (set B) is/are used to collect second data and one or more first reference signals in the first reference signal set (set A) is/are used to collect first data.

FIG. 7 is an exemplary diagram of collected data in embodiments of the present application. For example, for beam management with AI/ML functionality/model and BM case-1 (spatial beam prediction) at a network side, during training data collection, if set B is a subset of set A, a gNB may configure a reference signal the same as that of the set A for data collection. As shown in FIG. 7, in each group, set A data (first data) may be included, and UE may store measurement results and report the collected data.

For another example, if set B is a subset of set A, a gNB may configure the reference signal the same as that of the set B and the reference signal the same as that of the set A for data collection. The data for input (second data, measurement results for set B) may be associated with the ground truth data (first data, measurement results for set A). As shown in FIG. 6, in each group, associated set A data (first data) and set B data (second data) may be included, and UE may store measurement results and report the collected data.

For another example, difference between set A data (first data) and set B data (second data) is taken as the collected data.

In some embodiments, for a network-side model and spatial beam prediction, a second reference signal set (set B) for beam measurement is associated with a second beam pattern and/or a first reference signal set (set A) for beam prediction is associated with a first beam pattern;
one or more second reference signals in the second reference signal set (set B) is/are used to collect the second data, the second beam pattern is indicated to the terminal equipment, and the second data and the second beam pattern are associated, and/or, one or more first reference signals in the first reference signal set (set A) is/are used to collect the first data, the first beam pattern is indicated to the terminal equipment, and the first data and the first beam pattern are associated.

FIG. 8 is an exemplary diagram of collected data in embodiments of the present application. For example, if different beam patterns are applied to set A and/or set B of an AI/ML functionality/model at a network side, when configuring the reference signals of set A and/or set B for data collection, a gNB may indicate the beam patterns of set A and/or set B to UE, for example, via RRC and/or MAC CE and/or DCI.

As shown in FIG. 8, the measurement results of set A and/or set B may be labeled with corresponding beam patterns. For example, each group corresponds to an identifier of one beam pattern. In each group, associated set A data (first data) and set B data (second data) may be included, and UE may store measurement results and report the collected data.

For another example, in one group, if the beam patterns of set A and set B are different, the measurement results of set A and set B may be labeled with different beam patterns.

Training data collection for spatial beam prediction (BM case-1) with a terminal side model (UE-side model) will be explained hereinbelow.

In some embodiments, for a terminal side model and spatial beam prediction, a second reference signal set (set B) for beam measurement is not a subset of a first reference signal set (set A) for beam prediction, one or more second reference signals in the second reference signal set (set B) is/are used to collect the second data, and one or more first reference signals in the first reference signal set (set A) is/are used to collect the first data.

For example, for beam management with an AI/ML functionality/model and BM case-1 (spatial beam prediction) at a terminal side, during training data collection, if set B is not a subset of set A, a gNB may configure a reference signal the same as that of the set B and a reference signal the same as that of the set A for data collection. The data for input (second data, measurement results for set B) may be associated with the ground truth data (first data, measurement results for set A). As shown in FIG. 6, in each group, associated set A data (first data) and set B data (second data) may be included, and UE may store measurement results and report the collected data.

In some embodiments, for a terminal side model and spatial beam prediction, the second reference signal set (set B) for beam measurement is a subset of the first reference signal set (set A) for beam prediction, one or more first reference signals in the first reference signal set (set A) is/are used to collect the first data, or, one or more second reference signals in the second reference signal set (set B) is/are used to collect the second data and one or more first reference signals in the first reference signal set (set A) is/are used to collect the first data.

For example, for beam management with AI/ML functionality/model and BM case-1 (spatial beam prediction) at a terminal side, during training data collection, if set B is a subset of set A, a gNB may configure a reference signal the same as that of the set A for data collection. As shown in FIG. 7, in each group, set A data (first data) may be included, and the UE may store measurement results and report the collected data.

For another example, if set B is a subset of set A, a gNB may configure reference signals the same as that of the set B and reference signals the same as that of the set A for data collection. The data for input (second data, measurement results for set B) may be associated with the ground truth data (first data, measurement results for set A). As shown in FIG. 6, in each group, associated set A data (first data) and set B data (second data) may be included, and the UE may store measurement results and report the collected data.

For another example, difference between set A data (first data) and set B data (second data) is taken as the collected data.

In some embodiments, for a terminal side model and spatial beam prediction, a second beam pattern supported/preferred for a second reference signal set (set B) for beam measurement and/or a first beam pattern supported/preferred for a first reference signal set (set A) for beam prediction is/are reported by the terminal equipment, and/or, whether the second reference signal set (set B) is a subset of the first reference signal set (set A) is also reported by the terminal equipment;
one or more second reference signals in the second reference signal set (set B), and/or, one or more first reference signals in the first reference signal set (set A), is/are configured according to a beam pattern supported by the terminal equipment.

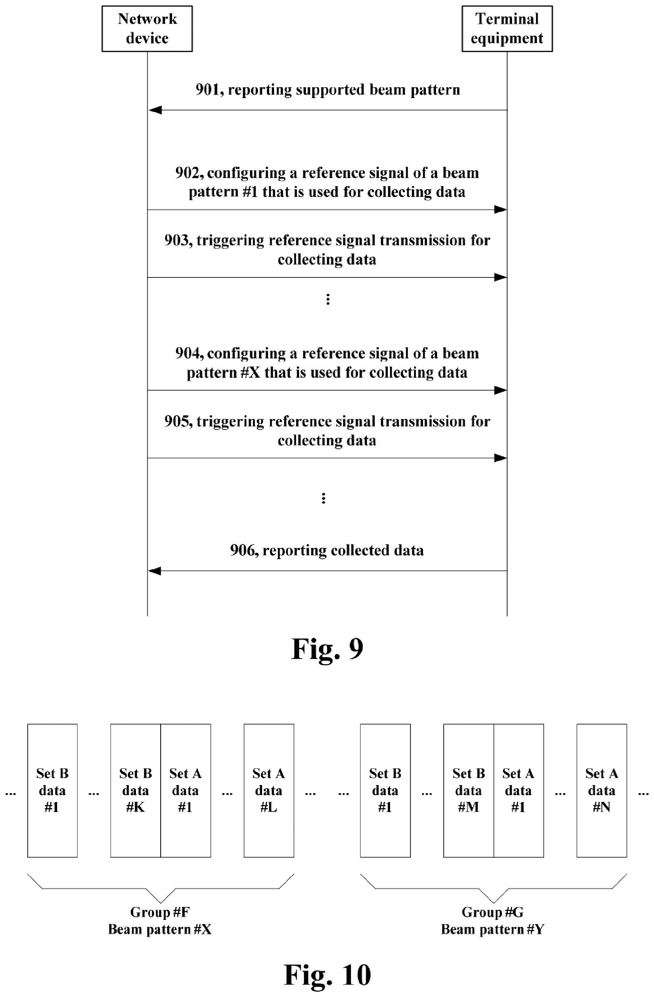

FIG. 9 is a schematic diagram of data collection in embodiments of the present application. For example, for beam management with an AI/ML functionality/model and BM case-1 (spatial beam prediction) at a terminal side, during training data collection, UE may report the supported/preferred beam patterns for set A and/or set B (as shown in 901), and in addition, the UE may also report whether set B is a subset of set A.

A gNB may configure reference signals for set A and/or set B according to the beam patterns supported by UE (as shown in 902). The gNB may trigger RS transmission for data collection (as shown in 903). If the UE supports a plurality of beam patterns of set A and/or set B, the gNB may configure and trigger RS transmission multiple times (as shown in 904 and 905). The UE may collect data and report the collected data to the gNB (as shown in 906).

In some embodiments, a plurality of second beam patterns and/or a plurality of first beam patterns are supported by the terminal equipment;
one or more second reference signals in the second reference signal set (set B) is/are used to collect second data, one of the plurality of second beam patterns is indicated to the terminal equipment, and the second data and the second beam pattern are associated, and/or, one or more first reference signals in the first reference signal set (set A) is/are used to collect first data, one of the plurality of first beam patterns is indicated to the terminal equipment, and the first data and the first beam pattern are associated.

FIG. 10 is an exemplary diagram of collected data in embodiments of the present application. For example, if a plurality of beam patterns of Set A and/or Set B are supported by UE, when configuring the reference signals of Set A and/or Set B for data collection, a gNB may indicate the beam patterns of Set A and/or Set B to the UE, for example, via RRC and/or MAC CE and/or DCI.

As shown in FIG. 10, the measurement results of Set A and/or Set B may be labeled with corresponding beam patterns. For example, each group corresponds to an identifier of one beam pattern. In each group, associated Set A data (first data) and Set B data (second data) may be included, and UE may store measurement results and report the collected data.

For another example, in one group, if the beam patterns of set A and set B are different, the measurement results of set A and set B may be labeled with different beam patterns.

Training data collection for temporal beam prediction (BM case-2) with a network side model (NW-side model) will be explained hereinbelow.

In some embodiments, for a network side model and temporal beam prediction, a second reference signal set (set B) for beam measurement is not a subset of a first reference signal set (set A) for beam prediction, one or more second reference signals for one or more time instances in the second reference signal set (set B) is/are used to collect second data, and one or more first reference signals for one or more time instances in the first reference signal set (set A) is/are used to collect first data.

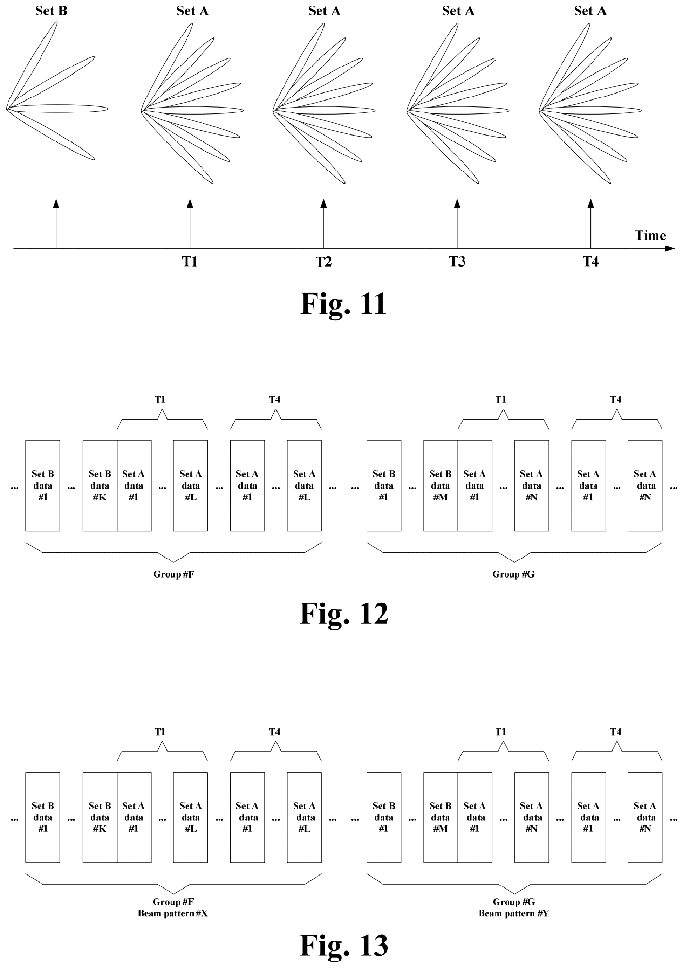

FIG. 11 is an exemplary diagram of reference signal transmission in embodiments of the present application. For example, for beam management with an AI/ML functionality/model and BM case-2 (temporal beam prediction) at a network side, during training data collection, if Set B is not a subset of Set A, a gNB may configure a reference signal the same as that of the Set B for one or more time instances and configure a reference signal the same as that of the Set A for one or more time instances, for data collection.

FIG. 12 is an exemplary diagram of collected data in embodiments of the present application. For example, the data for input (second data, measurement results for set B) may be associated with the ground truth data (first data, measurement results for set A). As shown in FIG. 12, in each group, Set A data (first data) for one or more time instances and Set B data (second data) for one or more time instances that are associated may be included, and UE may store measurement results and report the collected data.

In some embodiments, for a network side model and temporal beam prediction, a second reference signal set (set B) for beam measurement is a subset of a first reference signal set (set A) for beam prediction, one or more first reference signals for one or more time instances in the first reference signal set (set A) is/are used to collect first data, or, one or more second reference signals for one or more time instances in the second reference signal set (set B) is/are used to collect second data and one or more first reference signals for one or more time instances in the first reference signal set (set A) is/are used to collect first data.

In some embodiments, for a network-side model and temporal beam prediction, a second reference signal set (set B) for beam measurement is associated with a second beam pattern and/or a first reference signal set (set A) for beam prediction is associated with a first beam pattern;
one or more second reference signals in the second reference signal set (set B) is/are used to collect second data, the second beam pattern is indicated to the terminal equipment, and the second data and the second beam pattern are associated, and/or, one or more first reference signals in the first reference signal set (set A) is/are used to collect first data, the first beam pattern is indicated to the terminal equipment, and the first data and the first beam pattern are associated.

FIG. 13 is an exemplary diagram of collected data in embodiments of the present application. For example, if different beam patterns are applied to set A and/or set B of the AI/ML functionality/model at the network side, when configuring the reference signals of set A and/or set B for data collection, a gNB may indicate the beam patterns of set A and/or set B to UE, for example, via RRC and/or MAC CE and/or DCI.

As shown in FIG. 13, the measurement results of Set A and/or Set B may be labeled with corresponding beam patterns. For example, each group corresponds to an identifier of one beam pattern. In each group, Set A data (first data) for one or more time instances and Set B data (second data) for one or more time instances that are associated may be included, and UE may store measurement results and report the collected data.

For another example, in one group, if the beam patterns of set A and set B are different, the measurement results of set A and set B may be labeled with different beam patterns.

For another example, the collected set A data (first data) and/or set B data (second data) may also be associated with the number of time instances for measurement and intervals between the time instances for measurement, and the collected set A data (first data) and/or set B data (second data) may also be associated with the number of time instances for prediction and intervals between the time instances for prediction.

Training data collection for temporal beam prediction (BM case-2) with a terminal side model (UE-side model) will be explained hereinbelow.

In some embodiments, for a terminal side model and temporal beam prediction, a second reference signal set (set B) for beam measurement is not a subset of a first reference signal set (set A) for beam prediction, one or more second reference signals for one or more time instances in the second reference signal set (set B) is/are used to collect the second data, and one or more first reference signals for one or more time instances in the first reference signal set (set A) is/are used to collect the first data.

For example, for beam management with an AI/ML functionality/model and BM case-2 (temporal beam prediction) at a terminal side, during training data collection, if set B is not a subset of set A, a gNB may configure a reference signal the same as that of the set B and a reference signal the same as that of the set A for data collection. The data for input (second data, measurement results for set B) may be associated with the ground truth data (first data, measurement results for set A). As shown in FIG. 12, in each group, Set A data (first data) for one or more time instances and Set B data (second data) for one or more time instances that are associated may be included, and UE may store measurement results and report the collected data.

In some embodiments, for a terminal side model and temporal beam prediction, the second reference signal set (set B) for beam measurement is a subset of the first reference signal set (set A) for beam prediction, one or more first reference signals for one or more time instances in the first reference signal set (set A) is/are used to collect the first data, or, one or more second reference signals for one or more time instances in the second reference signal set (set B) is/are used to collect the second data and one or more first reference signals for one or more time instances in the first reference signal set (set A) is/are used to collect the first data.

In some embodiments, for a terminal side model and temporal beam prediction, a second beam pattern supported for a second reference signal set (set B) for beam measurement and/or a first beam pattern supported for a first reference signal set (set A) for beam prediction is/are reported by the terminal equipment, and/or, whether the second reference signal set (set B) is a subset of the first reference signal set (set A) is reported by the terminal equipment, and/or, the number of supported or preferred time instances for measurement is reported by the terminal equipment, and/or, the number of supported or preferred time instances for time prediction is reported by the terminal equipment;
one or more second reference signals in the second reference signal set (set B), and/or, one or more first reference signals in the first reference signal set (set A), is/are configured according to a beam pattern supported by the terminal equipment and/or the number of time instances supported or preferred by the terminal equipment.

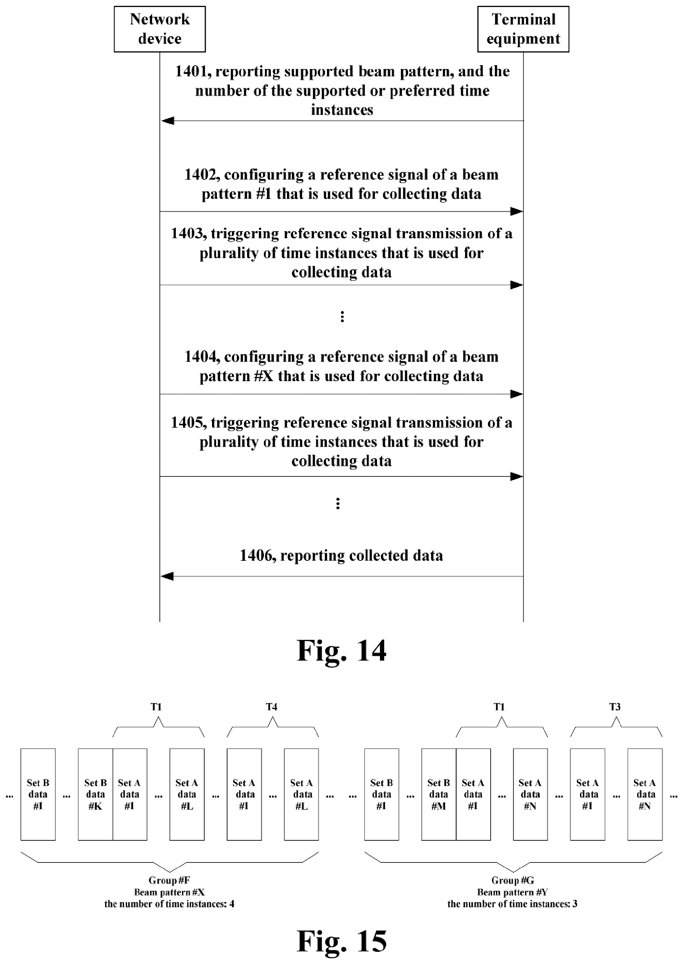

FIG. 14 is a schematic diagram of data collection in embodiments of the present application. For example, for beam management with an AI/ML functionality/model and BM case-2 (temporal beam prediction) at the terminal side, during training data collection, UE may report the supported/preferred beam patterns for set A and/or set B (as shown in 1401). In addition, the UE may also report the number of the supported/preferred time instances for measurement and/or the number of the supported/preferred time instances for time prediction.

A gNB may configure reference signals for set A and/or set B according to the beam patterns supported by UE (as shown in 1402). The gNB may trigger RS transmission for one or more time instances for data collection (as shown in 1403). If the UE supports a plurality of beam patterns of set A and/or set B, the gNB may configure and trigger RS transmission multiple times (as shown in 1404 and 1405). The UE may collect data and report the collected data to the gNB (as shown in 1406).

In some embodiments, a plurality of second beam patterns and/or a plurality of first beam patterns are supported by the terminal equipment;
one or more second reference signals in the second reference signal set (set B) is/are used to collect the second data, one of the plurality of second beam patterns is indicated to the terminal equipment, and the second data and the second beam pattern are associated, and/or, one or more first reference signals in the first reference signal set (set A) is/are used to collect the first data, one of the plurality of first beam patterns is indicated to the terminal equipment, and the first data and the first beam pattern are associated.

FIG. 15 is an exemplary diagram of collected data in embodiments of the present application. For example, if a plurality of beam patterns of set A and/or set B are supported by UE, when configuring the reference signals of set A and/or set B for data collection, a gNB may indicate the beam patterns of set A and/or set B to the UE, for example, via RRC and/or MAC CE and/or DCI.

As shown in FIG. 15, the measurement results of Set A and/or Set B may be labeled with corresponding beam patterns. For example, each group corresponds to an identifier of one beam pattern. In each group, Set A data (first data) for one or more time instances and Set B data (second data) for one or more time instances that are associated may be included, and UE may store measurement results and report the collected data.

For another example, in one group, if the beam patterns of set A and set B are different, the measurement results of set A and set B may be labeled with different beam patterns. For another example, in one group, the measurement results of set B for one or more time instances are included in the collected data.

For another example, the collected set A data (first data) and/or set B data (second data) may also be associated with the number of time instances for measurement and intervals between the time instances for measurement, and the collected set A data (first data) and/or set B data (second data) may also be associated with the number of time instances for prediction and intervals between the time instances for prediction.

Data collection has been schematically illustrated hereinabove, and reference signal configuration and data reporting will be schematically illustrated hereinbelow.

In some embodiments, the terminal equipment collects and/or stores the first data and/or the second data; and the terminal equipment reports the first data and/or the second data to the network device; wherein the reporting is initiated by the terminal equipment or triggered by the network device.

For example, for the collected data, UE may store such data, and reporting may be triggered/initiated by the UE under certain conditions, or triggered or initiated by a network side. The UE may report these collected data to a gNB.

In one example, if accumulated data size has reached a certain threshold (which may be predefined or configured by the network side), the UE may initiate a request to transmit the collected data.

In another example, a storage header room report may be introduced. For example, the storage header room may be defined as an available memory size. If the storage header room reaches a certain threshold, the UE may initiate a request to transmit the collected data.

For another example, UE does not store the collected data; and the UE performs reporting immediately after performing measurement. For example, the UE may perform reporting via DCI.

For another example, for training data collection, data may be further labeled with one or more or all of the following information: cell ID, carrier ID, BWP ID, or TCI state.

For another example, for training data collection, data (including model input data and/or ground truth data) may be associated with an AI/ML functionality/model. For example, the model input data and the ground truth data may be associated with an AI/ML functionality/model ID. When training data collection is triggered, the gNB may indicate the corresponding AI/ML functionality/model, such as a functionality/model ID of AI/ML.

For another example, when training data collection is performed, an AI/ML functionality/model may be enabled, that is, AI/ML may be utilized for data collection. Alternatively, the AI/ML functionality/model may not be enabled. For example, UE with traditional beam management may also perform training data collection.

In some embodiments, a reference signal for acquiring first data and a first reference signal set (set A) for beam prediction are configured via the same configuration information. In some embodiments, a reference signal for acquiring first data and a first reference signal set (set A) for beam prediction are configured via different pieces of configuration information.

In some embodiments, a reference signal for acquiring second data and a second reference signal set (set B) for beam measurement are configured via the same configuration information. In some embodiments, a reference signal for acquiring second data and a second reference signal set (set B) for beam measurement are configured via different pieces of configuration information,

For example, a reference signal for collecting model input data (second data) may be different from set B, and/or a reference signal for collecting ground truth data (first data) may be different from set A. For another example, set B may be a subset of reference signals for collecting model input data (second data), and/or set A may be a subset of reference signals for collecting ground truth data (first data).

The reference signal configuration and data reporting has been illustrated schematically hereinabove, and contents related to overhead reduction will be described hereinbelow.

In some embodiments, group common downlink control information (DCI) is used to trigger a plurality of terminal equipments to perform measurement for data collection; the group common downlink control information (DCI) is first DCI, and a first RNTI is used for the first DCI.

For example, a group common DCI may be introduced to trigger a plurality of UEs or a group of UEs to perform measurement for data collection. For example, the group common DCI may be newly defined. As another example, a new RNTI value may be introduced for the group common DCI. After the group common DCI is received, the plurality of UEs may perform measurement and collect data. Whether UE reports measurement results or stores measurement results may depend on a configuration at a network side and/or UE capability.

For another example, CSI-RS may be transmitted to the plurality of UEs over the same time resource and/or the same frequency resource.

For another example, for temporal beam prediction (BM case-2), during collection of ground truth data, different subsets of reference signals in set A may be transmitted at different time instances. For example, subset 1 of set A is transmitted at a time instant 1, subset 2 of set A is transmitted at a time instant 2, and so on.

Content related to performance monitoring will be explained hereinbelow.

In some embodiments, the terminal equipment determines (checks) performance of the AI/ML functionality/model when measurement for data collection is performed; wherein at least a part of first data and/or at least a part of second data is/are associated with a performance metric of the AI/ML functionality/model.

For example, when UE measures the reference signal for data collection, the UE may also check the performance of the AI/ML functionality/model, such as SGCS. Performance metric of the AI/ML may be used to label some data samples/groups, or to label all data samples/groups.

For another example, if the performance metric of the AI/ML is higher than a certain threshold, the corresponding data samples/groups shall be discarded. If the performance metric of the AI/ML is lower than a certain threshold, the corresponding data samples/groups shall be retained. Alternatively, if the performance metric of the AI/ML is lower than a certain threshold, the corresponding data samples/groups shall be discarded. If the performance metric of the AI/ML is higher than a certain threshold, the corresponding data samples/groups shall be retained.

For another example, if performance of the AI/ML functionality/model is poor (e.g., below a threshold), UE may initiate a request for data collection.

In some embodiments, one or more reference signals for AI/ML functionality/model monitoring is/are used for measurement for data collection.

For example, a reference signal set used for AI/ML functionality/model monitoring may also be used for data collection, or one or more subsets of the reference signal set used for AI/ML functionality/model monitoring may also be used for data collection.

The embodiments of the present application may be applied to a terminal equipment side model (UE-side model), and may also be applied to a network device side model (gNB-side model), but the present application is not limited to this. In addition, the AI/ML in the embodiments of the present application may be used for beam management, such as temporal beam prediction and spatial beam prediction, but the present application is not limited to this, and for example non AI/ML may also be used for data collection.

The embodiments above only schematically illustrate the present application, but the present application is not limited to this, and appropriate variations may also be made on the basis of the above embodiments. For example, the above embodiments may be used separately, or one or more of the above embodiments may be combined.

As can be seen from the above embodiments, the terminal equipment acquires data for AI/ML functionality/model training according to configuration information. Thus, accurate training data can be obtained, and the performance and efficiency of AI/ML can be improved.

### Embodiments of a Second Aspect

The embodiments of the present application provide a data collection method, which is explained from a network device side. The embodiments of the second aspect may be combined with the embodiments of the first aspect, and the same content as the embodiments of the first aspect will not be repeated.

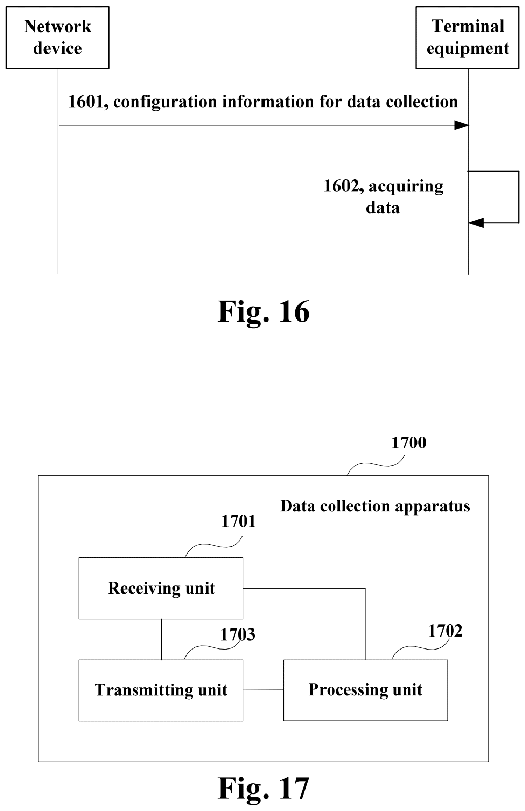

FIG. 16 is a schematic diagram of a data collection method in embodiments of the present application, as shown in FIG. 16, the method including:
1601: a network device transmits configuration information for collecting data to a terminal equipment; and

As shown in FIG. 16, the method may further include:
1602: the terminal equipment acquires data for AI/ML functionality/model training according to the configuration information.

It is worth noting that FIG. 16 above only schematically illustrates the embodiments of the present application, but the present application is not limited to this. For example, the order of execution between operations may be adjusted appropriately, and some other operations may be added or one or more operations may be removed. Those skilled in the art may make appropriate variations in accordance with the above contents, and which is not limited to the disclosure of FIG. 16 above.

The embodiments above only schematically illustrate the present application, but the present application is not limited to this, and appropriate variations may also be made on the basis of the above embodiments. For example, the above embodiments may be used separately, or one or more of the above embodiments may be combined.

As can be seen from the above embodiments, the terminal equipment acquires data for AI/ML functionality/model training according to configuration information. Thus, accurate training data can be obtained, and the performance and efficiency of AI/ML can be improved.

### Embodiments of a Third Aspect

The embodiments of the present application provide a data collection apparatus. The apparatus may be, for example, a terminal equipment, or one or more parts or components configured in the terminal equipment, and the same content as the embodiment of the first and second aspects will not be repeated.

FIG. 17 is a schematic diagram of a data collection apparatus in embodiments of the present application, as shown in FIG. 17, the data collection apparatus 1700 in the embodiments of the present application including:
a receiving unit 1701 configured to receive configuration information for collecting data, from a network device; and
a processing unit 1702 configured to acquire data for AI/ML functionality/model training according to the configuration information.

In some embodiments, first data (labeled data) for output of an AI/ML functionality/model is collected, and/or, second data (input data) for input of the AI/ML functionality/model is collected; and the first data and the second data are collected in an associated manner.

In some embodiments, one or more second reference signals in a second reference signal set for beam measurement is/are transmitted to the terminal equipment, and the terminal equipment measures the second reference signal(s) and acquires the second data.

In some embodiments, one or more first reference signals in a first reference signal set (set A) for beam prediction is/are transmitted to the terminal equipment, and the terminal equipment measures the first reference signal(s) and acquires the first data.

In some embodiments, the second data includes an index of the second reference signal and corresponding beam quality information, and the first data includes an index of the first reference signal and corresponding beam quality information; or the second data includes an index of the second reference signal, and the first data includes an index of the first reference signal.

In some embodiments, for a network side model and spatial beam prediction,
a second reference signal set (set B) for beam measurement is not a subset of a first reference signal set (set A) for beam prediction, one or more second reference signals in the second reference signal set (set B) is/are used to collect the second data, and one or more first reference signals in the first reference signal set (set A) is/are used to collect the first data.

In some embodiments, for a network side model and spatial beam prediction,
the second reference signal set (set B) for beam measurement is a subset of the first reference signal set (set A) for beam prediction, one or more first reference signals in the first reference signal set (set A) is/are used to collect the first data, or, one or more second reference signals in the second reference signal set (set B) is/are used to collect the second data and one or more first reference signals in the first reference signal set (set A) is/are used to collect the first data.

In some embodiments, for a network-side model and spatial beam prediction, a second reference signal set (set B) for beam measurement is associated with a second beam pattern and/or a first reference signal set (set A) for beam prediction is associated with a first beam pattern.

In some embodiments, one or more second reference signals in the second reference signal set (set B) is/are used to collect the second data, the second beam pattern is indicated to the terminal equipment, and the second data and the second beam pattern are associated, and/or, one or more first reference signals in the first reference signal set (set A) is/are used to collect the first data, the first beam pattern is indicated to the terminal equipment, and the first data and the first beam pattern are associated.

In some embodiments, for a terminal side model and spatial beam prediction,
a second reference signal set (set B) for beam measurement is not a subset of a first reference signal set (set A) for beam prediction, one or more second reference signals in the second reference signal set (set B) is/are used to collect the second data, and one or more first reference signals in the first reference signal set (set A) is/are used to collect the first data.

In some embodiments, for a terminal side model and spatial beam prediction,
the second reference signal set (set B) for beam measurement is a subset of the first reference signal set (set A) for beam prediction, one or more first reference signals in the first reference signal set (set A) is/are used to collect the first data, or, one or more second reference signals in the second reference signal set (set B) is/are used to collect the second data and one or more first reference signals in the first reference signal set (set A) is/are used to collect the first data.

In some embodiments, for a terminal side model and spatial beam prediction,
a second beam pattern supported for a second reference signal set (set B) for beam measurement and/or a first beam pattern supported for a first reference signal set (set A) for beam prediction is/are reported by the terminal equipment, and/or, whether the second reference signal set (set B) is a subset of the first reference signal set (set A) is also reported by the terminal equipment.

In some embodiments, for a terminal side model and spatial beam prediction,
one or more second reference signals in the second reference signal set (set B), and/or, one or more first reference signals in the first reference signal set (set A), is/are configured according to a beam pattern supported by the terminal equipment.

In some embodiments, a plurality of second beam patterns and/or a plurality of first beam patterns are supported by the terminal equipment;
one or more second reference signals in the second reference signal set (set B) is/are used to collect the second data, one of the plurality of second beam patterns is indicated to the terminal equipment, and the second data and the second beam pattern are associated, and/or, one or more first reference signals in the first reference signal set (set A) is/are used to collect the first data, one of the plurality of first beam patterns is indicated to the terminal equipment, and the first data and the first beam pattern are associated.

In some embodiments, for a network side model and temporal beam prediction,
a second reference signal set (set B) for beam measurement is not a subset of a first reference signal set (set A) for beam prediction, one or more second reference signals for one or more time instances in the second reference signal set (set B) is/are used to collect the second data, and one or more first reference signals for one or more time instances in the first reference signal set (set A) is/are used to collect the first data.

In some embodiments, for a network side model and temporal beam prediction,
the second reference signal set (set B) for beam measurement is a subset of the first reference signal set (set A) for beam prediction, one or more first reference signals for one or more time instances in the first reference signal set (set A) is/are used to collect the first data, or, one or more second reference signals for one or more time instances in the second reference signal set (set B) is/are used to collect the second data and one or more first reference signals for one or more time instances in the first reference signal set (set A) is/are used to collect the first data.

In some embodiments, for a network-side model and temporal beam prediction, a second reference signal set (set B) for beam measurement is associated with a second beam pattern and/or a first reference signal set (set A) for beam prediction is associated with a first beam pattern.

In some embodiments, one or more second reference signals in the second reference signal set (set B) is/are used to collect the second data, the second beam pattern is indicated to the terminal equipment, and the second data and the second beam pattern are associated, and/or, one or more first reference signals in the first reference signal set (set A) is/are used to collect the first data, the first beam pattern is indicated to the terminal equipment, and the first data and the first beam pattern are associated.

In some embodiments, the collected set A data (first data) and/or set B data (second data) may also be associated with the number of time instances for measurement and intervals between the time instances for measurement, and the collected set A data (first data) and/or set B data (second data) may also be associated with the number of time instances for prediction and intervals between the time instances for prediction.

In some embodiments, for a terminal side model and temporal beam prediction,
a second reference signal set (set B) for beam measurement is not a subset of a first reference signal set (set A) for beam prediction, one or more second reference signals for one or more time instances in the second reference signal set (set B) is/are used to collect the second data, and one or more first reference signals for one or more time instances in the first reference signal set (set A) is/are used to collect the first data.

In some embodiments, for a terminal side model and temporal beam prediction,
the second reference signal set (set B) for beam measurement is a subset of the first reference signal set (set A) for beam prediction, one or more first reference signals for one or more time instances in the first reference signal set (set A) is/are used to collect the first data, or, one or more second reference signals for one or more time instances in the second reference signal set (set B) is/are used to collect the second data and one or more first reference signals for one or more time instances in the first reference signal set (set A) is/are used to collect the first data.

In some embodiments, for a terminal side model and temporal beam prediction,
a second beam pattern supported for a second reference signal set (set B) for beam measurement and/or a first beam pattern supported for a first reference signal set (set A) for beam prediction is/are reported by the terminal equipment, and/or, whether the second reference signal set (set B) is a subset of the first reference signal set (set A) is reported by the terminal equipment, and/or, the number of supported or preferred time instances for measurement is reported by the terminal equipment, and/or, the number of supported or preferred time instances for time prediction is reported by the terminal equipment.

In some embodiments, for a terminal side model and temporal beam prediction,
one or more second reference signals in the second reference signal set (set B), and/or, one or more first reference signals in the first reference signal set (set A), is/are configured according to a beam pattern supported by the terminal equipment and/or the number of time instances supported or preferred by the terminal equipment.

In some embodiments, a plurality of second beam patterns and/or a plurality of first beam patterns are supported by the terminal equipment;
one or more second reference signals in the second reference signal set (set B) is/are used to collect the second data, one of the plurality of second beam patterns is indicated to the terminal equipment, and the second data and the second beam pattern are associated, and/or, one or more first reference signals in the first reference signal set (set A) is/are used to collect the first data, one of the plurality of first beam patterns is indicated to the terminal equipment, and the first data and the first beam pattern are associated.

In some embodiments, the collected set A data (first data) and/or set B data (second data) may also be associated with the number of time instances for measurement and intervals between the time instances for measurement, and the collected set A data (first data) and/or set B data (second data) may also be associated with the number of time instances for prediction and intervals between the time instances for prediction.

In some embodiments, the processing unit 1702 is further configured to collect and/or store the first data and/or the second data; as shown in FIG. 17, the data collection apparatus 1700 may also include:
a transmitting unit 1703 configured to report the first data and/or the second data to the network device; wherein the reporting is initiated by the terminal equipment or triggered by the network device.

In some embodiments, a reference signal for acquiring the first data and a first reference signal set (set A) for beam prediction are configured via the same configuration information, or, a reference signal for acquiring the first data and a first reference signal set (set A) for beam prediction are configured via different pieces of configuration information.

In some embodiments, a reference signal for acquiring the second data and a second reference signal set (set B) for beam measurement are configured via the same configuration information, or, the reference signal for acquiring the second data and a second reference signal set (set B) for beam measurement are configured via different pieces of configuration information.

In some embodiments, group common downlink control information (DCI) is used to trigger a plurality of terminal equipments to perform measurement for data collection; the group common downlink control information (DCI) is first DCI, and a first RNTI is used for the first DCI.

In some embodiments, the processing unit 1702 is further configured to determine (check) performance of the AI/ML functionality/model when measurement for data collection is performed; wherein at least a part of first data and/or at least a part of second data is/are associated with a performance metric of the AI/ML functionality/model.

In some embodiments, one or more reference signals for AI/ML functionality/model monitoring is/are used for measurement for data collection.

The embodiments above only schematically illustrate the present application, but the present application is not limited to this, and appropriate variations may also be made on the basis of the above embodiments. For example, the above embodiments may be used separately, or one or more of the above embodiments may be combined.

It is worth noting that only the parts or modules related to the present application are illustrated hereinbefore, but the present application is not limited to this. The data collection apparatus 1700 may further include other parts or modules, and the details of these parts or modules can be seen by referring to the related art.

In addition, for the sake of simplicity, FIG. 17 only illustratively shows the connection relationship or signal trend between the individual parts or modules, but it should be clear to those skilled in the art that various related techniques such as bus connections may be employed. The above individual parts or modules can be implemented by hardware facilities such as a processor, a memory, a transmitter, a receiver, etc., which is not limited in the present application.

As can be seen from the above embodiments, the terminal equipment acquires data for AI/ML functionality/model training according to configuration information. Thus, accurate training data can be obtained, and the performance and efficiency of AI/ML can be improved.

### Embodiments of a Fourth Aspect

The embodiments of the present application provide a data collection apparatus. The apparatus may be, for example, a network device, or one or more parts or components configured in the network device, and the same content as the embodiments of the first to third aspects will not be repeated.

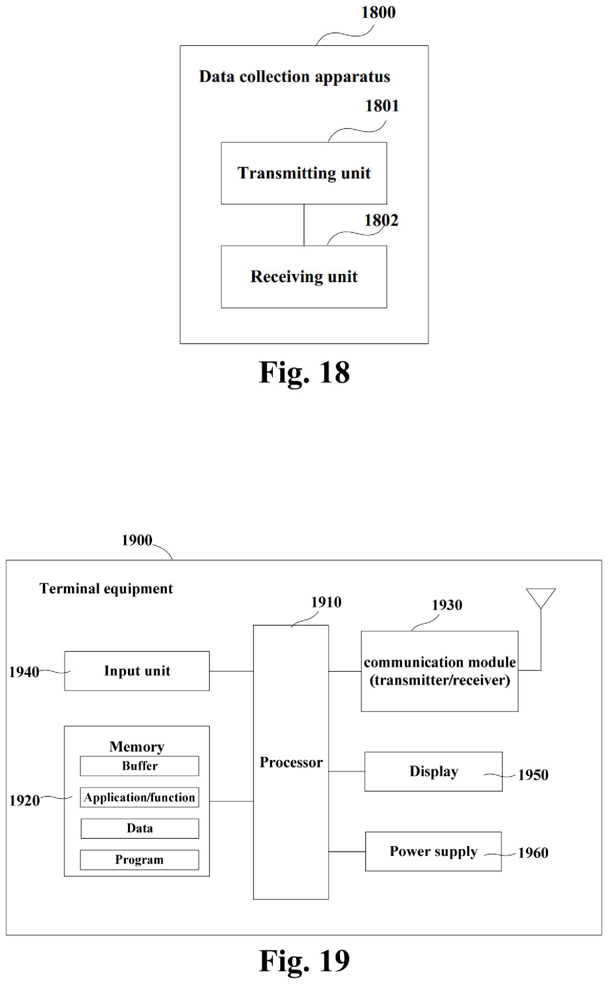

FIG. 18 is another schematic diagram of a data collection apparatus in embodiments of the present application, as shown in FIG. 18, the data collection apparatus 1800 including:
a transmitting unit 1801 configured to transmit configuration information for collecting data to a terminal equipment; wherein the configuration information is used by the terminal equipment to acquire data for AI/ML functionality/model training.

In some embodiments, as shown in FIG. 18, the data collection apparatus 1800 may further include:
a receiving unit 1802 configured to receive first data and/or second data reported by a terminal equipment; wherein the reporting is initiated by the terminal equipment or triggered by a network device.

The embodiments above only schematically illustrate the present application, but the present application is not limited to this, and appropriate variations may also be made on the basis of the above embodiments. For example, the above embodiments may be used separately, or one or more of the above embodiments may be combined.

It is worth noting that only the parts or modules related to the present application are illustrated hereinbefore, but the present application is not limited to this. The data collection apparatus 1800 may further include other parts or modules, and the details of these parts or modules can be seen by referring to the related art.

In addition, for the sake of simplicity, FIG. 18 only illustratively shows the connection relationship or signal trend between the individual parts or modules, but it should be clear to those skilled in the art that various related techniques such as bus connections may be employed. The above individual parts or modules can be implemented by hardware facilities such as a processor, a memory, a transmitter, a receiver, etc., which is not limited in the present application.

As can be seen from the above embodiments, the terminal equipment acquires data for AI/ML functionality/model training according to configuration information. Thus, accurate training data can be obtained, and the performance and efficiency of AI/ML can be improved.

### Embodiments of a Fifth Aspect

The embodiments of the present application further provide a communication system, referring to FIG. 1, the same content as the embodiments in the first to fourth aspects will not be repeated.

In some embodiments, the communication system 100 may at least include:
a network device configured to transmit configuration information for collecting data to a terminal equipment; and
a terminal equipment configured to acquire data for AI/ML functionality/model training according to the configuration information.

The embodiments of the present application further provide a terminal equipment, but which is not limited in the present application, and may also be other devices.

FIG. 19 is a schematic diagram of a terminal equipment in embodiments of the present application. As shown in FIG. 19, the terminal equipment 1900 may include a processor 1910 and a memory 1920; the memory 1920 stores data and program, and is coupled to the processor 1910. It is worth noting that this figure is exemplary; other types of structures may also be used in addition to or instead of the structure to implement telecommunications functions or other functions.

For example, the processor 1910 may be configured to execute the program to implement the data collection method as described in the embodiments of the first aspect. For example, the processor 1910 may be configured to perform the following controls of: receiving configuration information for collecting data, from a network device; and acquiring data for AI/ML functionality/model training according to the configuration information.

As shown in FIG. 19, the terminal equipment 1900 may further include a communication module 1930, an input unit 1940, a display 1950, and a power supply 1960. The functions of the above parts are similar to the relevant art, and will not be repeated here. It is worth noting that the terminal equipment 1900 is not necessarily required to include all of the parts shown in FIG. 19, and the above parts are not essential; in addition, the terminal equipment 1900 may further include parts not shown in FIG. 19, with reference to the relevant art.

The embodiments of the present application further provide a network device, which may be, for example, a base station, but which is not limited in the present application, and may also be other network devices.

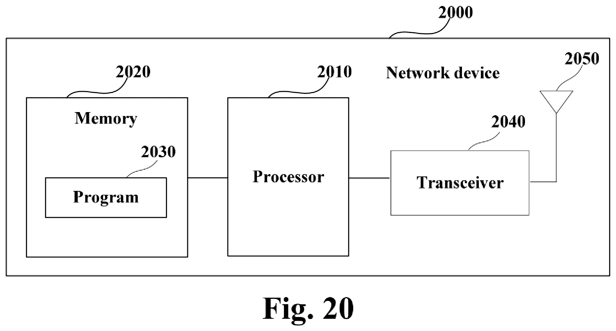

FIG. 20 is a schematic diagram of composition of the network device in embodiments of the present application. As shown in FIG. 20, the network device 2000 may include a processor 2010 (such as a central processing unit (CPU)) and a memory 2020; the memory 2020 is coupled to the processor 2010. The memory 2020 may store various data and also may store a program 2030 for information processing, and the program 2030 is executed under the control of the processor 2010.

For example, the processor 2010 may be configured to execute the program to implement the data collection method as described in the embodiments of the second aspect. For example, the processor 2010 may be configured to perform the following control of: transmitting configuration information for collecting data to a terminal equipment; wherein the configuration information is used by the terminal equipment to acquire data for AI/ML functionality/model training.

In addition, as shown in FIG. 20, the network device 2000 may further include: a transceiver 2040 and an antenna 2050, etc.; wherein the functionalities of the above parts are similar to the relevant art, and will not be repeated here. It is worth noting that the network device 2000 is not necessarily required to include all of the parts shown in FIG. 20; in addition, the network device 2000 may further include parts not shown in FIG. 20, with reference to the relevant art.

The embodiments of the present application further provide a computer program which, when being executed in a terminal equipment, causes the terminal equipment to execute the data collection method described in the embodiments of the first aspect.

The embodiments of the present application further provide a storage medium storing a computer program which causes a terminal equipment to execute the data collection method described in the embodiments of the first aspect.

The embodiments of the present application further provide a computer program which, when being executed in a network device, causes the network device to execute the data collection method described in the embodiments of the second aspect.

The embodiments of the present application further provide a storage medium storing a computer program which causes a network device to execute the data collection method described in the embodiments of the second aspect.

The above apparatuses and methods of the present application can be implemented by hardware or by hardware combined with software. Th present application relates to a computer readable program which, when being executed by a logic unit, enables the logic unit to implement the apparatuses or components mentioned above, or enables the logic unit to implement the methods or steps described above. The present application also relates to storage medium for storing the above programs, such as a hard disk, a magnetic disk, a compact disc, a DVD, a flash memory, etc.

The method/apparatus described in conjunction with the embodiments of the present application may be directly embodied as hardware, a software module executed by the processor, or a combination of both. For example, one or more of the functional block diagrams and/or combination thereof shown in the drawing may correspond to both software modules and hardware modules of the computer program flow. These software modules can correspond to the steps shown in the drawings respectively. These hardware modules can be realized, for example, by solidifying these software modules using field programmable gate arrays (FPGA).

The software module may reside in an RAM memory, a flash memory, an ROM memory, an EPROM memory, an EEPROM memory, a register, a hard disk, a removable disk, a CD-ROM, or a storage medium in any other form known in the art. A storage medium can be coupled to a processor so that the processor can read information from the storage medium and write information to the storage medium; or the storage medium can be a constituent part of the processor. The processor and the storage medium can be located in the ASIC. The software module can be stored in the memory of the mobile terminal or in a memory card that can be inserted into the mobile terminal. For example, if a device (such as a mobile terminal) uses a large-capacity MEGA-SIM card or a large-capacity flash memory device, the software module can be stored in the MEGA-SIM card or the large-capacity flash memory device.

One or more of the functional blocks and/or combination thereof shown in the drawing may be implemented as a general-purpose processor, a digital signal processor (DSP), an application-specific integrated circuit (ASIC), a field programmable gate array (FPGA) or other programmable logic device, a discrete gate or a transistor logic device, a discrete hardware assembly, or any appropriate combination thereof, for performing the functions described in the present application. One or more of the functional blocks and/or combination thereof shown in the drawing may also be implemented as combination of computing devices, such as combination of DSP and a microprocessor, multiple microprocessors, one or more microprocessors combined with DSP communication, or any other such configuration.

The present application is described in combination with specific embodiments hereinabove, but a person skilled in the art should know clearly that the description is exemplary, but not limitation to the protection scope of the present application. A person skilled in the art can make various variations and modifications to the present application according to spirit and principle of the application, and these variations and modifications should also be within the scope of the present application.

For implementation including the above embodiments, the following supplements are further disclosed:
1. A data collection method, including:
   receiving, by a terminal equipment, configuration information for collecting data, from a network device; and
   acquiring, by the terminal equipment, data for AI/ML functionality/model training according to the configuration information.
2. A data collection method, including:
   transmitting, by a network device, configuration information for collecting data to a terminal equipment; wherein the configuration information is used by the terminal equipment to acquire data for AI/ML functionality/model training.
3. A terminal equipment including a memory storing a computer program and a processor configured to execute the computer program to implement the data collection method according to the supplement 1.
4. A network device including a memory storing a computer program and a processor configured to execute the computer program to implement the data collection method according to the supplement 2.
5. A computer program product including at least a computer program which, when being executed by a processor, causes a terminal equipment to execute the data collection method according to the supplement 1.
6. A computer program product including at least a computer program which, when being executed by a processor, causes a network device to execute the data collection method according to the supplement 2.

## Claims

1. A data collection apparatus, comprising:
a receiving unit configured to receive configuration information for collecting data, from a network device; and
a processing unit configured to acquire data for AI/ML functionality/model training according to the configuration information.

2. The apparatus according to claim 1, wherein first data for output of an AI/ML functionality/model is collected, and/or, second data for input of the AI/ML functionality/model is collected; and
the first data and the second data are collected in an associated manner.

3. The apparatus according to claim 1, wherein one or more second reference signals in a second reference signal set for beam measurement is/are transmitted to a terminal equipment, and the terminal equipment measures the second reference signal(s) and acquires second data;
and/or,
one or more first reference signals in a first reference signal set for beam prediction is/are transmitted to a terminal equipment, and the terminal equipment measures the first reference signal(s) and acquires first data.

4. The apparatus according to claim 3, wherein the second data comprises an index of the second reference signal and corresponding beam quality information, and the first data comprises an index of the first reference signal and corresponding beam quality information;
or, the second data comprises an index of the second reference signal, and the first data comprises an index of the first reference signal.

5. The apparatus according to claim 1, wherein for a network-side model and spatial beam prediction,
a second reference signal set for beam measurement is not a subset of a first reference signal set for beam prediction, one or more second reference signals in the second reference signal set is/are used to collect second data, and one or more first reference signals in the first reference signal set is/are used to collect first data;
or,
a second reference signal set for beam measurement is a subset of a first reference signal set for beam prediction, one or more first reference signals in the first reference signal set is/are used to collect first data, or, one or more second reference signals in the second reference signal set is/are used to collect second data and one or more first reference signals in the first reference signal set is/are used to collect first data.

6. The apparatus according to claim 1, wherein for a network-side model and spatial beam prediction, a second reference signal set for beam measurement is associated with a second beam pattern and/or a first reference signal set for beam prediction is associated with a first beam pattern;
one or more second reference signals in the second reference signal set is/are used to collect second data, the second beam pattern is indicated to a terminal equipment, and the second data and the second beam pattern are associated, and/or, one or more first reference signals in the first reference signal set is/are used to collect first data, the first beam pattern is indicated to a terminal equipment, and the first data and the first beam pattern are associated.

7. The apparatus according to claim 1, wherein for a terminal-side model and spatial beam prediction,
a second reference signal set for beam measurement is not a subset of a first reference signal set for beam prediction, one or more second reference signals in the second reference signal set is/are used to collect second data, and one or more first reference signals in the first reference signal set is/are used to collect first data;
or,
a second reference signal set for beam measurement is a subset of a first reference signal set for beam prediction, one or more first reference signals in the first reference signal set is/are used to collect first data, or, one or more second reference signals in the second reference signal set is/are used to collect second data and one or more first reference signals in the first reference signal set is/are used to collect first data.

8. The apparatus according to claim 1, wherein for a terminal-side model and spatial beam prediction,
a second beam pattern supported for a second reference signal set for beam measurement and/or a first beam pattern supported for a first reference signal set for beam prediction is/are reported by a terminal equipment, and/or, whether the second reference signal set is a subset of the first reference signal set is also reported by the terminal equipment;
one or more second reference signals in the second reference signal set, and/or, one or more first reference signals in the first reference signal set, is/are configured according to a beam pattern supported by the terminal equipment.

9. The apparatus according to claim 8, wherein a plurality of second beam patterns and/or a plurality of first beam patterns are supported by the terminal equipment;
one or more second reference signals in the second reference signal set is/are used to collect second data, one of the plurality of second beam patterns is indicated to the terminal equipment, and the second data and the second beam pattern are associated, and/or, one or more first reference signals in the first reference signal set is/are used to collect first data, one of the plurality of first beam patterns is indicated to the terminal equipment, and the first data and the first beam pattern are associated.

10. The apparatus according to claim 1, wherein for a network-side model and temporal beam prediction,
a second reference signal set for beam measurement is not a subset of a first reference signal set for beam prediction, one or more second reference signals for one or more time instances in the second reference signal set is/are used to collect second data, and one or more first reference signals for one or more time instances in the first reference signal set is/are used to collect first data;
or,
a second reference signal set for beam measurement is a subset of a first reference signal set for beam prediction, one or more first reference signals for one or more time instances in the first reference signal set is/are used to collect first data, or, one or more second reference signals for one or more time instances in the second reference signal set is/are used to collect second data and one or more first reference signals for one or more time instances in the first reference signal set is/are used to collect first data.

11. The apparatus according to claim 1, wherein for a network-side model and temporal beam prediction, a second reference signal set for beam measurement is associated with a second beam pattern and/or a first reference signal set for beam prediction is associated with a first beam pattern;
one or more second reference signals in the second reference signal set is/are used to collect second data, the second beam pattern is indicated to terminal equipment, and the second data and the second beam pattern are associated, and/or, one or more first reference signals in the first reference signal set is/are used to collect first data, the first beam pattern is indicated to the terminal equipment, and the first data and the first beam pattern are associated;
and/or,
first data and/or second data are associated with the number of time instances for measurement and intervals between the time instances for measurement, and the first data and/or the second data are/is associated with the number of time instances for prediction and intervals between the time instances for prediction.

12. The apparatus according to claim 1, wherein for a terminal-side model and temporal beam prediction,
a second reference signal set for beam measurement is not a subset of a first reference signal set for beam prediction, one or more second reference signals for one or more time instances in the second reference signal set is/are used to collect second data, and one or more first reference signals for one or more time instances in the first reference signal set is/are used to collect first data;
or,
a second reference signal set for beam measurement is a subset of a first reference signal set for beam prediction, one or more first reference signals for one or more time instances in the first reference signal set is/are used to collect first data, or, one or more second reference signals for one or more time instances in the second reference signal set is/are used to collect second data and one or more first reference signals for one or more time instances in the first reference signal set is/are used to collect first data.

13. The apparatus according to claim 1, wherein for a terminal-side model and temporal beam prediction,
a second beam pattern supported for a second reference signal set for beam measurement and/or a first beam pattern supported for a first reference signal set for beam prediction is/are reported by a terminal equipment, and/or, whether the second reference signal set is a subset of the first reference signal set is reported by the terminal equipment, and/or, the number of supported or preferred time instances for measurement is reported by the terminal equipment, and/or, the number of supported or preferred time instances for time prediction is reported by the terminal equipment;
one or more second reference signals in the second reference signal set, and/or, one or more first reference signals in the first reference signal set, is/are configured according to a beam pattern supported by the terminal equipment and/or the number of time instances supported or preferred by the terminal equipment.

14. The apparatus according to claim 13, wherein a plurality of second beam patterns and/or a plurality of first beam patterns are supported by the terminal equipment;
one or more second reference signals in the second reference signal set is/are used to collect second data, one of the plurality of second beam patterns is indicated to the terminal equipment, and the second data and the second beam pattern are associated, and/or, one or more first reference signals in the first reference signal set is/are used to collect first data, one of the plurality of first beam patterns is indicated to the terminal equipment, and the first data and the first beam pattern are associated;
and/or,
first data and/or second data are associated with the number of time instances for measurement and intervals between the time instances for measurement, and the first data and/or the second data are associated with the number of time instances for prediction and intervals between the time instances for prediction.

15. The apparatus according to claim 1, wherein the processing unit is further configured to collect and/or store first data and/or second data; and the apparatus further comprises:
a transmitting unit configured to report the first data and/or the second data to the network device; wherein the reporting is initiated by a terminal equipment or triggered by the network device.

16. The apparatus according to claim 1, wherein a reference signal for acquiring first data and a first reference signal set for beam prediction are configured via the same configuration information, or, a reference signal for acquiring first data and a first reference signal set for beam prediction are configured via different pieces of configuration information;
and/or,
a reference signal for acquiring second data and a second reference signal set for beam measurement are configured via the same configuration information, or, a reference signal for acquiring second data and a second reference signal set for beam measurement are configured via different pieces of configuration information.

17. The apparatus according to claim 1, wherein group common downlink control information is used to trigger a plurality of terminal equipments to perform measurement for data collection; the group common downlink control information is first DCI, and a first RNTI is used for the first DCI;
and/or,
one or more reference signals for AI/ML functionality/model monitoring is/are used for measurement for data collection.

18. The apparatus according to claim 1, wherein the processing unit is further configured to: determine performance of the AI/ML functionality/model when measurement for data collection is performed; wherein at least a part of first data and/or at least a part of second data is/are associated with a performance metric of the AI/ML functionality/model.

19. A data collection apparatus, comprising:
a transmitting unit configured to transmit configuration information for collecting data to a terminal equipment; wherein the configuration information is used by the terminal equipment to acquire data for AI/ML functionality/model training.

20. A communication system, comprising:
a network device configured to transmit configuration information for collecting data to a terminal equipment; and
a terminal equipment configured to acquire data for AI/ML functionality/model training according to the configuration information.
